# EUROPÄISCHE PATENTSCHRIFT

(11) **EP 2 682 737 B1**
(45) Veröffentlichungstag und Bekanntmachung des Hinweises auf die Patenterteilung: **01.05.2024**
(21) Anmeldenummer: 12175179.6
(22) Anmeldetag: 05.07.2012
(51) Int. Cl.: G01N 17/00

(54) **Vorrichtung zur Simulation einer spektralen UV-Charakteristik durch UV-Lichtemissionsdioden**
Device to simulate a UV spectral characteristic using UV-LEDs
Dispositif de simulation d'une caractéristique spectrale UV par des diodes électroluminescentes UV

(43) Veröffentlichungstag der Anmeldung: 08.01.2014
(73) Patentinhaber: Atlas Material Testing Technology GmbH, 63589 Linsengericht/Altenhasslau (DE)
(72) Erfinder: Rudolph, Bernd, 63755 Alzenau (DE); Khudaverdyan, Mkrtych, 73529 Schwäbisch Gmünd (DE); March, Peter, 60326 Frankfurt am Main (DE)
(74) Vertreter: Lambsdorff & Lange Patentanwälte Partnerschaft mbB

(56) Entgegenhaltungen:
- WO-A2-02/12127
- DE-B3- 10 350 020
- US-A1- 2004 075 065
- US-A1- 2006 241 726
- US-A1- 2007 034 026
- US-A1- 2007 276 455
- US-A1- 2010 276 410

## Beschreibung

Die vorliegende Erfindung betrifft eine Vorrichtung zur künstlichen Bewitterung oder Lichtechtheitsprüfung von Proben.

In Vorrichtungen zur künstlichen Bewitterung wird eine Bewertung des witterungsbedingten Alterungsverhaltens einer Probe, insbesondere einer flächigen Werkstoffprobe, durchgeführt, wobei die Probe einer künstlichen Bewitterung ausgesetzt wird. Derartige Vorrichtungen weisen zu diesem Zweck üblicherweise eine Bewitterungskammer auf, in welcher Halterungsmittel für die Halterung von zu bewitternden Proben und eine Strahlungsquelle zur Beaufschlagung der Proben mit Strahlung, insbesondere mit UV-Strahlung, angeordnet sind.

In derartigen Vorrichtungen zur künstlichen Bewitterung oder Lichtechtheitsprüfung von Werkstoffproben soll zumeist die Lebensdauer von Werkstoffen abgeschätzt werden, die in ihrer Anwendung ständig den natürlichen Wetterverhältnissen ausgesetzt sind und sich somit unter klimatischen Einflüssen wie Sonnenlicht, Sonnenwärme, Feuchtigkeit und dergleichen verschlechtern. Um eine gute Simulation der natürlichen Witterungsgegebenheiten zu erhalten, ist es von Vorteil, wenn die spektrale Energieverteilung des in der Vorrichtung erzeugten Lichtes möglichst derjenigen der natürlichen Sonnenstrahlung entspricht, aus welchem Grund in solchen Geräten als bislang Strahlungsquelle Xenon-Strahler eingesetzt werden. Zusätzlich wird eine zeitraffende Alterungsprüfung der Werkstoffe im Wesentlichen durch eine gegenüber den natürlichen Verhältnissen stark intensivierte Bestrahlung der Proben erzielt, wodurch die Alterung der Proben beschleunigt wird. Somit lässt sich nach verhältnismäßig kurzer Zeit eine Aussage über das Langzeit-Alterungsverhalten einer Werkstoffprobe machen.

Ein Großteil der in künstlichen Bewitterungsgeräten untersuchten Werkstoffproben besteht aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den Polymeren oder Additiven temperaturabhängig sein, so dass die beobachtete Alterung der Werkstoffe ebenfalls temperaturabhängig ist.

In den bisher bekannten Bewitterungsprüfgeräten wird als Strahlungsquelle zumeist eine Xenon-Lampe eingesetzt. Mit dieser kann zwar bekanntermaßen das Sonnenspektrum recht gut simuliert werden, die emittierte Strahlung weist jedoch einen relativ hohen Spektralanteil im infraroten Spektralbereich auf, der zur Vermeidung von zu großer Aufheizung der Proben durch Filter unterdrückt werden muss. Eine handelsübliche Xenon-Strahlungsquelle weist zudem nur eine Lebensdauer von ca. 1500 Stunden auf.

Des Weiteren kann als Strahlungsquelle auch eine Metallhalogenidlampe eingesetzt werden, die jedoch den Nachteil aufweist, dass sie nicht oder nur sehr schwer regelbar ist. Dasselbe gilt auch für Fluoreszenz-Lampen, die ebenfalls bereits als Strahlungsquellen in Bewitterungsprüfgeräten eingesetzt wurden und denen nachteilhaft eine relativ kurze Lebensdauer zukommt.

Alle genannten Strahlungsquellen weisen darüber hinaus den Nachteil auf, dass sie spektral nicht veränderbar sind.

Ein weiterer Nachteil der oben genannten konventionellen Strahlungsquellen von Bewitterungsprüfgeräten besteht darin, dass diese entsprechend ihrer Konstruktion und ihrer Ansteuerung relativ unhandlich sind und somit beispielsweise veränderten Bedingungen hinsichtlich der Probenoberflächen der zu bestrahlenden Werkstoffproben nicht angepasst werden können.

Die Druckschrift DE 103 50 020 B3 beschreibt eine Vorrichtung zur künstlichen Bewitterung von Proben, bei welcher UV-Lichtemissionsdioden als Strahlungsquelle zum Einsatz kommen. Mit diesen kann der UV-Anteil des Sonnenspektrums insbesondere dadurch gut angenähert werden, indem verschiedene Sorten von UV-Lichtemissionsdioden mit verschiedenen Emissionscharakteristika verwendet werden. Es kann das gesamte Feld von Lichtemissionsdioden in Teilfeldern aufgeteilt sein, wobei in jedem Teilfeld mindestens eine Lichtemissionsdiode von jeder verwendeten spektralen Sorte enthalten ist.

Die Druckschrift WO 02/12127 A2 beschreibt UV-Lichtemissionssysteme für den Einsatz in Wasseraufbereitungsanlagen.

Die Druckschrift US 2004/0075065 A1 beschreibt eine Projektionsvorrichtung zum Bestrahlen eines Objekts mit UV-Strahlung von einer Mehrzahl von UV-LEDs.

Die Druckschrift US 2007/0276455 A1 beschreibt eine Hautbräunungskammer, welche eine Mehrzahl von UV-LEDs verschiedener Emissionsbanden aufweist.

Die Druckschrift US 2006/0241726 A1 beschreibt ein Verfahren zur Hautphotoverjüngung, bei welchem unter anderem auch UV-Strahlung von UV-LEDs zum Einsatz kommt.

Die Druckschrift US 2010/0276410 A1 beschreibt ein Belichtungssystem für Einrichtungen, in welchen Tiere in Gefangenschaft leben, wobei das Belichtungssystem unter anderem auch UV-Strahlung von UV-LEDs verwendet wird.

Es ist somit Aufgabe der vorliegenden Erfindung, eine UV-Strahlungsvorrichtung innerhalb einer Vorrichtung zur künstlichen Bewitterung oder Lichtechtheitsprüfung so auszugestalten, dass mit ihr eine spektrale UV-Charakteristik möglichst gut simuliert (oder emuliert) werden kann.

Diese Aufgabe wird durch die Merkmale des unabhängigen Patentanspruchs 1 gelöst. Eine vorteilhafte Ausgestaltung der Erfindung ist in dem Unteranspruch 2 angegeben. Bekanntermaßen weisen Lichtemissionsdioden eine nahezu monochrome spektrale Emissionscharakteristik auf. Es werden demgemäß mindestens drei spektral verschiedene UV-LEDs ausgewählt, deren Emissionsmaximum bei verschiedenen Wellenlängen liegt. Die UV-LEDs werden derart ausgewählt und angeordnet und/oder angesteuert, dass im Betrieb ohne besondere Maßnahmen die gewünschte zu erzielende spektrale UV-Charakteristik, nämlich die kurzwellige Anstiegsflanke des UV-Anteils des Sonnenspektrums optimal angepasst wird, und zwar in einer Weise, dass die spektrale Strahlungscharakteristik auf Probenebene ausreichend räumlich homogen ist. Es kann beispielsweise vorgesehen sein, die UV-Strahlungsvorrichtung schaltungstechnisch insofern einfach auszubilden, indem die UV-LEDs nur gemeinsam ansteuerbar sind und nicht individuell regelbar sind, falls beispielsweise die im Betrieb erzielbare räumliche Homogenität der spektralen Strahlungscharakteristik den Anforderungen genügt. Alternativ kann jedoch auch vorgesehen sein, die UV-LEDs einzeln regelbar auszuführen. Somit besteht die Möglichkeit, im Betrieb durch weitere Maßnahmen die Bedingungen zu verbessern, etwa indem die Lichtintensität der emittierten UV-Strahlung über den den LEDs zugeführten Strom individuell zu regeln. Ebenso ist möglich, die LEDs im elektrischen Pulsbetrieb anzusteuern, worauf weiter unten noch näher eingegangen werden wird.

Erfindungsgemäß sind die Gruppen von UV-LEDs derart auf einer ebenen Fläche räumlich verteilt angeordnet, dass ortsabhängige Variationen der Spektralverteilung in der Probenebene innerhalb vorgegebener Grenzen liegen. Dabei können diese Grenzen auf verschiedene Arten vorgegeben werden. Es kann zunächst eine gewünschte Spektralverteilung vorgegeben werden, die eine bestmögliche Approximation unter der Annahme von beispielsweise drei verschiedenen Klassen von UV-LEDs verschiedener Emissionscharakteristika darstellt, wobei man davon ausgeht, dass die UV-LEDs in einer Punktquelle zusammengefasst sind. Dann wird eine räumliche Verteilung dieser UV-LEDs so vorgenommen, dass an jedem Punkt in der Probenebene beispielsweise die Lichtintensität bei jeder Wellenlänge nur um einen vorgegebenen Betrag von der Lichtintensität der gewünschten Spektralverteilung bei dieser Wellenlänge abweichen darf und/oder bei jedem Punkt in der Probenebene eine über den gesamten Bereich der gewünschten Spektralverteilung kumulierte Abweichung der Lichtintensitäten von den Lichtintensitäten der gewünschten Spektralverteilung nur um einen vorgegebenen Betrag von der kumulierten Lichtintensität der gewünschten Spektralverteilung abweichen darf.

Erfindungsgemäß wird mit der Spektralverteilung die kurzwellige Anstiegsflanke des UV-Anteils des Sonnenspektrums approximiert.

Gemäß einer Ausführungsform sind die UV-LEDs nicht unabhängig voneinander ansteuerbar.

Gemäß einer Ausführungsform sind die UV-LEDs unabhängig voneinander ansteuerbar. Insbesondere sind die UV-LEDs mit elektrischen Strömen unterschiedlicher Stromstärke beaufschlagbar oder mit unterschiedlicher Zeitabhängigkeit der elektrischen Ströme beaufschlagbar. Es kann auch vorgesehen sein, dass UV-LEDs einer Klasse nur gemeinsam ansteuerbar sind, also UV-LEDs einer Klasse nur mit einer bestimmten vorgegebenen Lichtintensität emittieren, jedoch UV-LEDs einer anderen Klasse gemeinsam mit einer davon verschiedenen Lichtintensität emittieren können.

Gemäß einer Ausführungsform sind genau vier Klassen von UV-LEDs verschiedener Emissionscharakteristika vorgesehen, welche insbesondere ihre Maxima bei den Wellenlängen 310 nm, 320 nm, 330 nm und 340 nm aufweisen.

Gemäß einer Ausführungsform sind die UV-LEDs auf einer flächigen Unterlage wie einer Schaltungsplatine montiert, welche Teil einer Einschubkassette sein kann, welche in einen dafür vorgesehenen Hohlraum der Vorrichtung eingeschoben werden kann.

Gemäß einer Ausführungsform sind entweder die gesamte UV-Strahlungsvorrichtung oder auch einzelne UV-LEDs in Bezug auf eine oder mehrere zu untersuchende Proben räumlich veränderbar angeordnet. Dies schafft die zusätzliche Möglichkeit, räumliche Inhomogenitäten der spektralen Verteilung der emittierten Strahlung auf Probenebene auszugleichen oder zumindest zu reduzieren.

Gemäß einer Ausführungsform ist zwischen der UV-Strahlungsvorrichtung und der Probenebene eine Streuscheibe angeordnet.

Im Folgenden wird die Erfindung anhand von Ausführungsbeispielen in Verbindung mit den Zeichnungsfiguren noch näher erläutert. Es zeigen:
Fig. 1A,B Beispiele für spektrale UV-Charakteristika in Form einer UV-Anstiegsflanke des Sonnenspektrums (A) und einer UV-Emissionscharakteristik einer UV-Strahlungsquelle (B);
Fig. 2 ein Ausführungsbeispiel einer erfindungsgemäßen Vorrichtung zur künstlichen Bewitterung oder Lichtechtheitsprüfung von Proben in einer perspektivischen Ansicht;
Fig. 3 eine Draufsicht auf eine nicht zur Erfindung gehörige UV-Strahlungsvorrichtung enthaltend eine Mehrzahl von UV-LEDs; und
Fig. 4 eine Draufsicht auf eine erfindungsgemäße UV-Strahlungsvorrichtung enthaltend eine Mehrzahl von UV-LEDs gemäß einer Ausführungsform.

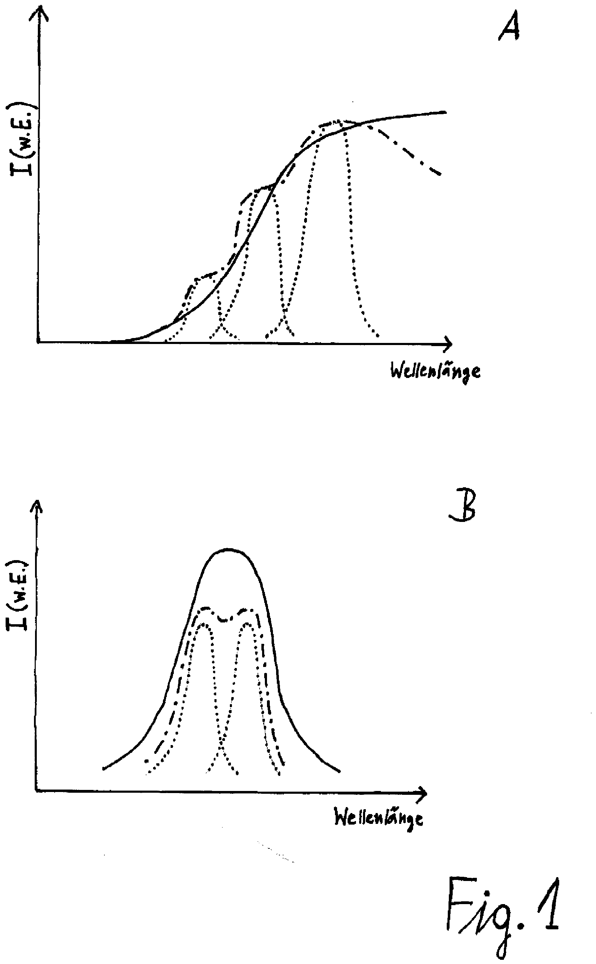

Fig. 1A zeigt das der vorliegenden Erfindung zugrundeliegende Prinzip anhand eines Wellenlängen-Intensitäts-Diagramms. Als durchgezogene Linie ist hier lediglich schematisch die kurzwellige Anstiegsflanke des UV-Anteils des Sonnenspektrums dargestellt. Diesen Verlauf versucht man bei der Bewitterungs-oder Lichtechtheitsprüfung mittels beispielsweise dreier UV-LEDs mit verschiedenen Emissionsspektren zu simulieren. Die Spektren der drei UV-LEDs sind als gepunktete Linien dargestellt, während das überlagerte Emissionsspektrum als strichpunktierte Linie gezeigt ist. Aus dem Diagramm wird ebenfalls bereits deutlich, dass den Emissionsspektren unterschiedliche Strahlungsintensitäten zukommen und somit die den Emissionsspektren zugehörigen LEDs verschiedene Gesamtstrahlungsintensitäten aufweisen sollten. Da erfindungsgemäß die Anzahl der in den verschiedenen Klassen enthaltenen LEDs gleich ist, werden die LEDs mit unterschiedlichen Stromstärken beaufschlagt.

Fig. 1B zeigt ein weiteres nicht zur Erfindung gehöriges Wellenlängen-Intensitäts-Diagramm, bei welchem als durchgezogene Linie eine beispielhafte UV-Emissionsbande einer UV-Strahlungsquelle gezeigt ist. Deren Verlauf kann man bei der Bewitterungs- oder Lichtechtheitsprüfung mittels beispielsweise zweier UV-LEDs mit verschiedenen Emissionsspektren simulieren, die gepunktet eingezeichnet sind. Es ergibt sich ein strichpunktiert eingezeichnetes überlagertes Spektrum, welches eine gute Annäherung an die zu simulierende spektrale UV-Charakteristik darstellt.

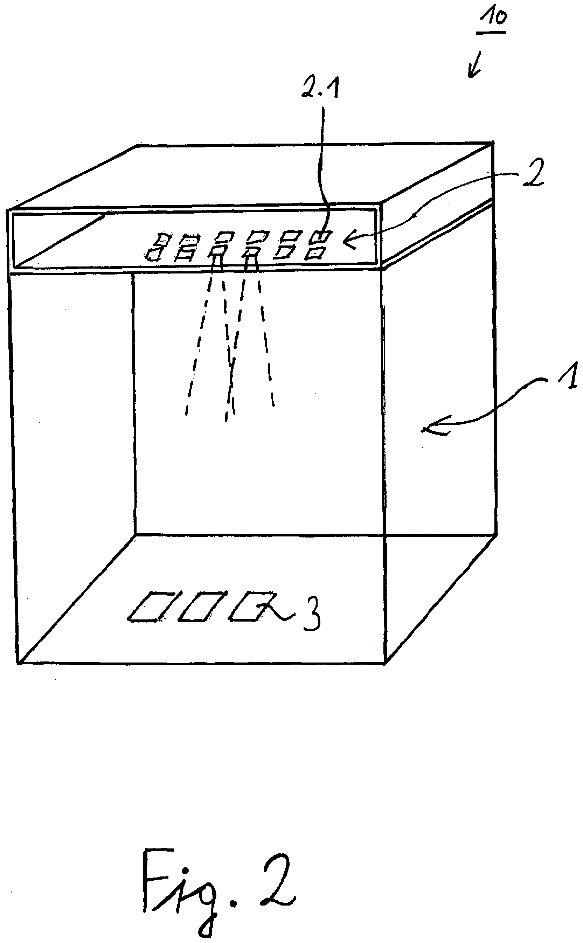

In der Fig. 2 ist eine Ausführungsform für eine Vorrichtung zur künstlichen Bewitterung oder Lichtechtheitsprüfung schematisch perspektivisch dargestellt. Die Vorrichtung weist eine Bewitterungskammer 1 auf, in welcher eine UV-Strahlungsvorrichtung 2 angeordnet ist. Im unteren Bereich der Probenkammer 1 können auf einer Bodenplatte geeignete Halterungsmittel vorhanden sein, mittels derer eine Anzahl Proben 3 gehaltert werden können. Die Vorrichtung ist somit als ein Bewitterungsgerät mit stationärer Probenhalterung ausgelegt. Die Erfindung ist jedoch ebenso auf Bewitterungsgeräte mit bewegbaren Probenhalterungen anwendbar.

Die UV-Strahlungsvorrichtung 2 weist eine Mehrzahl von UV-LEDs 2.1 auf, die entlang den Zeilen und Spalten einer Matrix auf einer ebenen Fläche, wie beispielsweise einer Schaltungsplatine, montiert sein können und bezüglich ihrer Abstrahlcharakteristik derart ausgerichtet sein können, dass die Emissionsstrahlung senkrecht nach unten auf die zu untersuchenden Proben 3 gerichtet ist. In einer praktikablen Ausführungsform kann die Schaltungsplatine mit den auf ihrer unteren Oberfläche befestigten UV-LEDs als Teil einer Einschubkassette vorgesehen sein, welche in einen dafür vorgesehenen Schlitz auf der Oberseite der Vorrichtung 10 eingeschoben werden kann. Die Schaltungsplatine kann dabei eine untere Bodenfläche der Einschubkassette bilden, während der darüber gelegene Raumbereich von einem Kühlmedium durchströmt werden kann, um die von den UV-LEDs erzeugte Wärme effizient abzuführen.

Die Vorrichtung 10 kann selbstredend weitere Elemente enthalten, welche der Bewitterung der Proben dienen und hier lediglich aus Gründen der Einfachheit der Darstellung nicht gezeigt sind.

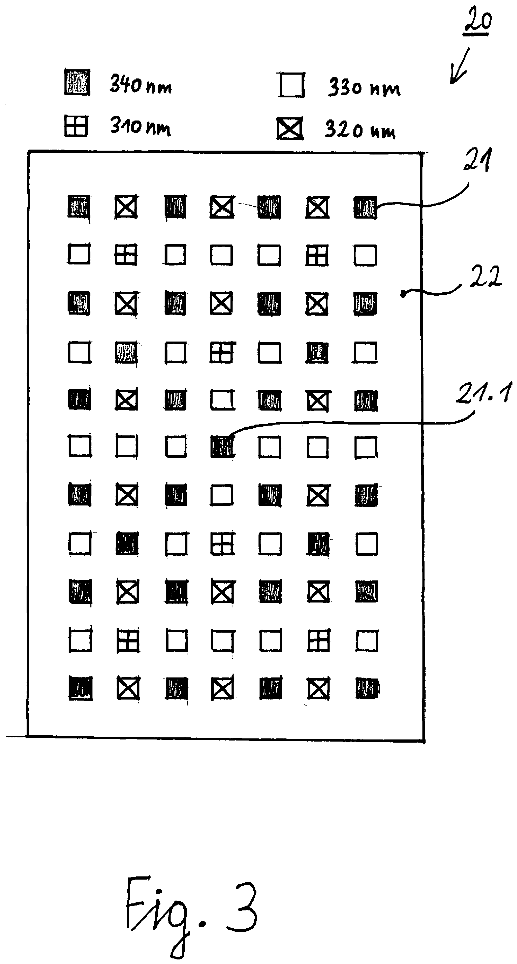

In der Fig. 3 ist eine Draufsicht auf eine nicht zur Erfindung gehörige UV-Strahlungsvorrichtung gezeigt. Die UV-Strahlungsvorrichtung 20 weist eine Mehrzahl von UV-LEDs 21 auf, welche entlang der Zeilen und Spalten einer Matrix angeordnet und auf einer flächigen Unterlage 22 wie einer Schaltungsplatine montiert sein können. In der Mehrzahl von UV-LEDs 21 können genau vier Klassen von UV-LEDs 21 verschiedener Emissionsbanden enthalten sein. Diese Emissionsbanden können so beschaffen sein, dass die Maxima bei Wellenlängen von 310 nm, 320 nm, 330 nm und 340 nm liegen.

Ein Grundproblem besteht darin, dass - wie in Fig. 2 gezeigt - mit den über eine Fläche verteilten UV-LEDs eine in einer Entfernung davon beabstandete mit Proben 3 bestückte Fläche derart bestrahlt werden kann, dass mit möglichst guter räumlicher Homogenität an jedem Punkt der mit Proben 3 bestückten Fläche eine spektrale Charakteristik bereitgestellt wird, welche die in Fig. 1 gezeigte Anstiegsflanke des UV-Anteils des Sonnenspektrums oder eine andere spektrale UV-Charakteristik simuliert. Das in der Fig. 3 gezeigte Ausführungsbeispiel löst dieses Problem durch eine bestimmte räumliche Verteilung der UV-LEDs 21 verschiedener Emissionsbanden auf der flächigen Unterlage 22. Von den insgesamt 77 UV-LEDs 21 können 29 ein Wellenlängenmaximum bei 340 nm aufweisen, 26 ein Wellenlängenmaximum bei 330 nm, 16 ein Wellenlängenmaximum bei 320 nm und 6 ein Wellenlängenmaximum bei 310 nm. Die gewählte räumliche Verteilung kann nun derart beschaffen sein, dass die UV-LEDs entsprechend ihren Emissionsbanden regelmäßig angeordnet sind, wobei die regelmäßige Anordnung in einer Punktsymmetrie bezüglich einer zentralen UV-LED 21.1 bestehen kann. Mit dieser gewählten räumlichen Anordnung erweist sich, dass eine gute räumliche Homogenität der spektralen Verteilung der Strahlung auf einer davon beabstandeten Probenfläche erzielbar ist. Es sind dabei auch andere nicht zur Erfindung gehörige Anordnungen denkbar. So kann z.B. eine punktsymmetrische Anordnung gewählt werden, bei der der Symmetriepunkt nicht in einer UV-LED besteht, sondern ein in einem Zwischenraum zwischen UV-LEDs gelegener Punkt ist.

Eine dazu alternative Ausführungsform könnte darin bestehen, dass die Anzahl der LEDs bei den genannten vier Wellenlängenmaxima gleich ist, die LEDs jedoch mit verschiedenen Strömen beaufschlagt werden. Die LEDs bei 340 nm würden somit jeweils mit einem höheren Strom beaufschlagt als die LEDs bei jeder anderen Wellenlänge.

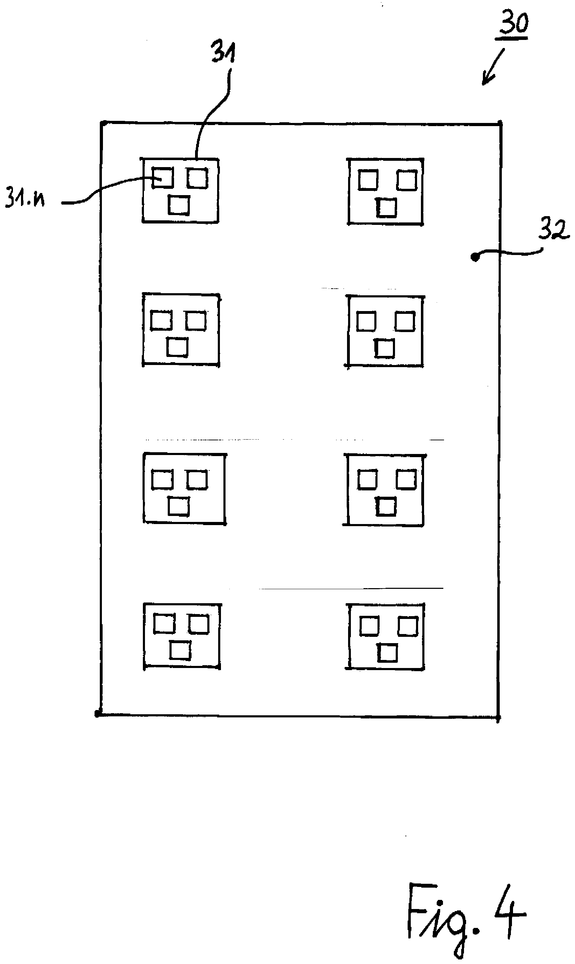

In der Fig. 4 ist eine Draufsicht auf eine erfindungsgemäße UV-Strahlungsvorrichtung gemäß einer Ausführungsform gezeigt. Die UV-Strahlungsvorrichtung 30 weist eine Mehrzahl von UV-LEDs 31.n auf, welche auf einer flächigen Unterlage 32 wie einer Schaltungsplatine montiert sind. Die UV-LEDs 31.n sind im Unterschied zu der Anordnung der Fig. 3 nicht räumlich gleich verteilt, sondern in Gruppen 31 zusammengefasst, wobei die Gruppen 31 identisch gebildet sind. Im dargestellten Ausführungsbeispiel enthalten die Gruppen jeweils drei UV-LEDs 31.n verschiedener UV-Emissionsbanden, nämlich solcher UV-Emissionsbanden wie sie in Fig.1A schematisch dargestellt sind, mit welchen die UV-Anstiegskante der Sonnenstrahlung approximiert werden kann. Es können aber in jeder der Gruppen auch mehr als drei UV-LEDs verschiedener UV-Emissionsbanden enthalten sein. Gegebenenfalls können in den Gruppen auch UV-LEDs bestimmter Klassen, also bestimmter UV-Emissionsbanden, mehrfach vertreten sein.

Es ist ferner vorgesehen, dass die UV-LEDs 31.n innerhalb einer Gruppe derart voneinander beabstandet sind, dass die Abstände vernachlässigbar gegenüber dem Abstand der UV-Strahlungsvorrichtung 30 zur Probenebene ist. Dies hat zur Folge, dass jede Gruppe 31 für sich genommen auf der Probenebene ein in der gewünschten Weise gemischtes ("fertiges") Spektrum erzeugt. Als Abstand der UV-LEDs 31.n voneinander wird ein Mittelwert der Mittelpunkts-Abstände von jeweils unmittelbar benachbarten UV-LEDs bestimmt und dieser Abstand ist kleiner als der Abstand zwischen der UV-Strahlungsvorrichtung 30 und der Probenebene.

## Patentansprüche

1. Vorrichtung zur künstlichen Bewitterung oder Lichtechtheitsprüfung von Proben, mit
einer Bewitterungskammer (1), in welcher
eine UV-Strahlungsvorrichtung (30) angeordnet ist, und in welcher
in einer von der UV-Strahlungsvorrichtung beabstandeten Probenebene mindestens eine Probe (3) anordenbar ist, wobei
die UV-Strahlungsvorrichtung (30) eine Mehrzahl von UV-Lichtemissionsdioden (UV-LEDs) (31.n) enthaltend drei oder mehr Klassen von UV-LEDs (31.n) verschiedener Emissionsbanden enthält, die spektral derart gewählt sind, dass in der Probenebene eine Spektralverteilung erzielbar ist, mit der die kurzwellige Anstiegsflanke des UV-Anteils des Sonnenspektrums simulierbar ist, wobei
die UV-LEDs (31.n) nicht räumlich gleich verteilt sondern in Gruppen (31) zu je 3 oder mehr UV-LEDs (31.n) zusammengefasst sind, wobei die Gruppen (31) identisch gebildet sind, wobei
die Gruppen (31) auf einer ebenen Fläche räumlich regelmäßig verteilt und getrennt voneinander angeordnet sind, und
in jeder Gruppe (31) mindestens eine UV-LED (31.n) aus jeder der verschiedenen Emissionsbanden vertreten ist, und wobei
als Abstand der UV-LEDs (31.n) voneinander innerhalb einer Gruppe (31) ein Mittelwert der Mittelpunkts-Abstände von jeweils unmittelbar benachbarten UV-LEDs (31.n) bestimmt wird und dieser Abstand kleiner als der Abstand zwischen der UV-Strahlungsvorrichtung (30) und der Probenebene ist.

2. Vorrichtung nach Anspruch 1, bei welcher
die Gruppen (31) in Form von 4 Zeilen und 2 Spalten neben- und untereinander angeordnet sind.

## Claims

1. Apparatus for the artificial weathering or light fastness testing of samples, comprising
a weathering chamber (1) in which
a UV radiation device (30) is arranged, and in which
at least one sample (3) can be arranged in a sample plane spaced from the UV radiation device, wherein
the UV radiation device (30) contains a plurality of UV light-emitting diodes (UV LEDs) (31.n) containing three or more classes of UV LEDs (31.n) of different emission bands which are selected spectrally in such a way that a spectral distribution can be obtained in the sample plane with which the short-wave rising edge of the UV component of the solar spectrum can be simulated, wherein
the UV LEDs (31.n) are not evenly distributed spatially but are combined in groups (31) of 3 or more UV LEDs (31.n) each, the groups (31) being formed identically, wherein
the groups (31) are spatially regularly distributed on a flat surface and arranged separately from one another, and
at least one UV LED (31.n) from each of the different emission bands is represented in each group (31), and wherein
the distance of the UV LEDs (31.n) from one another within a group (31) is determined as an average value of the center point distances of respectively directly adjacent UV LEDs (31.n) and this distance is smaller than the distance between the UV radiation device (30) and the sample plane.

2. Apparatus according to claim 1, in which
the groups (31) are arranged next to and below one another in the form of 4 rows and 2 columns.

## Revendications

1. Dispositif pour le vieillissement artificiel ou l'essai de solidité à la lumière d'échantillons, avec
une chambre de vieillissement (1), dans laquelle
un dispositif de rayonnement UV (30) est disposé, et dans lequel au moins un échantillon (3) peut être disposé dans un plan d'échantillon espacé du dispositif de rayonnement UV, dans lequel le dispositif de rayonnement UV (30) contient une pluralité de diodes d'émission de lumière UV (LED UV) (31.n) contenant trois classes ou plus de LED UV (31.n) de différentes bandes d'émission, qui sont choisies spectralement de telle sorte qu'il est possible d'obtenir dans le plan de l'échantillon une répartition spectrale avec laquelle le flanc de montée à ondes courtes de la partie UV du spectre solaire peut être simulé, où
les LED UV (31.n) ne sont pas réparties de manière égale dans l'espace mais sont rassemblées en groupes (31) de 3 LED UV (31.n) ou plus, les groupes (31) étant formés de manière identique, où les groupes (31) sont répartis régulièrement dans l'espace sur une surface plane et sont disposés séparément les uns des autres, et
dans chaque groupe (31), au moins une LED UV (31.n) de chacune des différentes bandes d'émission est représentée, et où on détermine comme distance entre les DEL UV (31.n) à l'intérieur d'un groupe (31) une valeur moyenne des distances entre les centres des DEL UV (31.n) respectivement directement voisines et cette distance est inférieure à la distance entre le dispositif de rayonnement UV (30) et le plan de l'échantillon.

2. Dispositif selon la revendication 1, dans lequel
les groupes (31) sont disposés les uns à côté des autres et les uns sous les autres sous la forme de 4 lignes et de 2 colonnes.
